# EUROPÄISCHE PATENTSCHRIFT

(11) **EP 3 883 822 B1**
(45) Veröffentlichungstag und Bekanntmachung des Hinweises auf die Patenterteilung: **12.07.2023**
(21) Anmeldenummer: 19805965.1
(22) Anmeldetag: 19.11.2019
(51) Int. Cl.: B60R 21/232, B60R 21/2334

(54) **KRAFTFAHRZEUG MIT FAHRZEUGSICHERHEITSSYSTEM**
VEHICLE WITH VEHICLE SAFETY SYSTEM
VÉHICULE À MOTEUR AVEC SYSTÈME DE SÉCURITÉ DE VÉHICULE

(30) Priorität: 19.11.2018 DE 102018128987
(43) Veröffentlichungstag der Anmeldung: 29.09.2021
(73) Patentinhaber: Dalphi Metal España, S.A., 36213 Vigo (ES)
(72) Erfinder: SANTÍN NAVARRO, Pedro, José, 36204 Vigo (ES)
(74) Vertreter: ZF Patentabteilung - DIPS
(86) Internationale Anmeldenummer: PCT/EP2019/081847
(87) Internationale Veröffentlichungsnummer: WO 2020/104481

(56) Entgegenhaltungen:
- EP-A1- 1 184 235
- DE-A1-102009 053 381
- US-A1- 2004 056 456
- US-A1- 2008 277 913

## Beschreibung

Die Erfindung betrifft ein Kraftfahrzeug mit einem Fahrzeugsicherheitssystem dass einen verstellbaren Fahrzeugsitz und einen zugeordneten Seitengassack umfasst.

Bei herkömmlichen Kraftfahrzeugen kann ein Seitengassack, insbesondere ein Vorhang-Seitengassack, vorgesehen sein, um einen Fahrzeuginsassen seitlich abzustützen, indem sich der Seitengassack im Bedarfsfall aufbläst, sodass der Fahrzeuginsasse bei einem Unfall geschützt ist. Die verwendeten Seitengassäcke sind dabei an die während der Fahrt üblicherweise vorgesehene, aufrechte Standardposition der Sitzlehne angepasst, da der Fahrzeugführer in einer im Wesentlichen aufrechten Sitzposition sitzen muss, um das Kraftfahrzeug führen zu können.

Insbesondere bei autonom fahrenden Kraftfahrzeugen kann ein Fahrer jedoch eine Sitzposition während der Fahrt einnehmen, die von den bestehenden Fahrzeugsicherheitssystemen, insbesondere von den vorhandenen Gassäcken, nicht abgedeckt ist. Bei autonom fahrenden Kraftfahrzeugen kann sich ein Fahrer während der Fahrt beispielsweise in einer liegenden Position befinden, die bei einem herkömmlichen Kraftfahrzeug nicht vorgesehen ist. Eine solche Sitzposition des Fahrers, also die liegende Sitzposition, bei der die Sitzlehne in einer nach hinten geneigten Position angeordnet ist, kann von den aus dem Stand der Technik bekannten Seitengassäcken nur bedingt abgedeckt werden.

Es ist somit eine Aufgabe der vorliegenden Erfindung, einen Seitengassack für ein Fahrzeugsicherheitssystem sowie ein Fahrzeugsicherheitssystem bereitzustellen, mittels dessen eine Erweiterung der abzudeckenden Sitzpositionen geschaffen wird. Aus dem Dokument DE10 2017 121 798 A1 ist ein Seitengassack nach dem Oberbegriff des Anspruchs 1 mit einem Zusatzgassack bekannt dessen Befüllung über eine Steuereinrichtung entsprechend der Position des Fahrzeugsitzes adaptiv aktivierbar ist.

Aus den Dokumenten DE10 2009 053 381 A1, US2004/056456 A1 und US2008/277913 A1 sind jeweils Seitengassäcke mit adaptiv aufblasbaren Entfaltungsabschnitten bekannt.

Diese Aufgabe wird erfindungsgemäß gelöst durch ein Kraftfahrzeug nach Anspruch 1.

Mit dem Begriff Entfaltungsform ist ein Entfaltungsvolumen, genauer gesagt eine Form des Seitengassacks im aufgeblasenen Zustand gemeint.

Da sich der adaptiv anpassbare Entfaltungsabschnitt des Seitengassacks an die Stellung der Rückenlehne des Fahrzeugsitzes anpasst, können auch Sitzpositionen jenseits der herkömmlichen Standardsitzposition mit im Wesentlichen aufrechter Sitzlehne abgedeckt werden. Der adaptiv anpassbare Entfaltungsabschnitt stellt demnach einen dynamischen Entfaltungsabschnitt dar. Einerseits wird also der Vorteil erreicht, dass sich der Seitengassack im Falle der Standardposition in gewünschter Weise entfalten kann, ohne dass die Entfaltung des für eine Schutzwirkung des Seitengassacks relevanten Bereichs durch die Sitzlehne des zugeordneten Fahrzeugsitzes bei der Entfaltung blockiert würde. Hier stützt sich nur der adaptiv anpassbare Entfaltungsabschnitt am Fahrzeugsitz ab, ohne die Entfaltung des Hauptbereiches des Seitengassackes zu behindern. Andererseits, im Falle der Liegeposition kann sich auch der adaptiv anpassbare Entfaltungsabschnitt in gewünschter Weise entfalten kann, da die Sitzlehne in dieser Stellung nicht die Entfaltung des adaptiv anpassbaren Entfaltungsabschnittes blockiert.

Der nicht-aufblasbare Bereich kann dabei (im aufgeblasenen Zustand) in einer Ebene vollständig oder nahezu vollständig von dem aufblasbaren Bereich umgeben sein. Dadurch wird mittels des nicht-aufblasbaren Bereichs eine Unterteilung des aufblasbaren Bereichs in verschiedene Teilbereiche erreicht. Hierdurch lässt sich die Entfaltungsform in einfacher Weise an die Position des zugeordneten Fahrzeugsitzes anpassen.

Der adaptiv anpassbare Entfaltungsabschnitt ist ein Teilbereich des aufblasbaren Bereichs, der von einem Hauptbereich des aufblasbaren Bereichs zumindest teilweise strömungsmäßig abgeschnitten ist. Anders ausgedrückt hat der Seitengassack einen aufblasbaren Bereich, der sich im Bedarfsfall aufbläst, wobei der aufblasbare Bereich in verschiedene Teilbereiche unterteilt ist, nämlich in einen Hauptbereich, der im aufgeblasenen Zustand (immer bzw. unabhängig von der Position des Fahrzeugsitzes) eine definierte Lage/Position einnimmt, und den adaptiv anpassbaren Entfaltungsabschnitt, der sich entsprechend adaptiv an die Position des Fahrzeugsitzes anpasst. Durch die zumindest teilweise strömungsmäßige Abtrennung des adaptiv anpassbaren Entfaltungsabschnitts von dem Hauptbereich kann die Lage/Position des adaptiv anpassbaren Entfaltungsabschnitts im aufgeblasenen Zustand des Seitengassacks je nach Sitzposition eines Fahrzeuginsassen entsprechend variieren.

Dabei steht der adaptiv anpassbare Entfaltungsabschnitt über mindestens einen Strömungskanal mit dem Hauptbereich in Strömungsverbindung.

Auf diese Weise kann Gas, das von einem Gasgenerator erzeugt wird, um den Seitengassack aufzublasen, von dem Hauptbereich in den adaptiv anpassbaren Entfaltungsabschnitt strömen. Somit ist nur ein Gasgenerator erforderlich, um den Hauptbereich und den Entfaltungsabschnitt aufzublasen, wodurch ein Fahrzeugsicherheitssystem mit dem Seitengassack besonders kostengünstig sein kann.

Gemäß einer Ausführungsform steht der adaptiv anpassbare Entfaltungsabschnitt über zwei Strömungskanäle mit dem Hauptbereich in Strömungsverbindung, insbesondere wobei mindestens einer der Strömungskanäle an einen unteren Längsrand des Seitengassacks angrenzt. Auf diese Weise kann der adaptiv anpassbare Entfaltungsabschnitt im Bedarfsfall besonders schnell aufgeblasen werden bzw. eine gewünschte Entfaltung des Seitengassacks erreicht werden, beispielsweise eine gewünschte Entfaltungsrichtung. Da der adaptiv anpassbare Entfaltungsabschnitt über mehr als einen Strömungskanal mit dem Hauptbereich verbunden ist, wird der adaptiv anpassbare Entfaltungsabschnitt außerdem in einer Ebene verschiebbar gehalten, das heißt, es wird verhindert, dass sich der Entfaltungsabschnitt verdreht. Dadurch, dass mindestens ein Strömungskanal an einen unteren Längsrand des Seitengassacks angrenzt, ist der adaptiv anpassbare Entfaltungsabschnitt besonders stabil gelagert, da ein unterer Rand des adaptiv anpassbaren Entfaltungsabschnitts über den Strömungskanal unmittelbar in den Hauptbereich übergeht.

Der nicht-aufblasbare Bereich ist beispielsweise durch mindestens einen Ausschnitt im Seitengassack und/ oder durch mindestens einen Abnäher im Seitengassack gebildet und/oder begrenzt. Dies hat den Vorteil, dass der nicht-aufblasbare Bereich auf einfache Weise mit den ohnehin für die Fertigung des Seitengassacks vorhandenen Vorrichtungen gebildet werden kann.

Bei eine vorteilhaften Ausführung des Seitengassackes ist der nicht-aufblasbare Bereich beidseitig durch einen Aufnäher im Wesentlichen vollständig abgedeckt, wobei, vorzugsweise, sich die Aufnäher in Fahrzeuglängsrichtung beidseitig über den nicht-aufblasbaren Bereich hinaus erstrecken, und wobei, weiter vorzugsweise, sich die Aufnäher nahezu über die gesamte Länge des Seitengassacks erstrecken Hierdurch wird sichergestellt, dass auch die nicht-aufblasbaren Bereiche eine Schutzwirkung entfalten .

Der nicht-aufblasbare Bereich kann (im aufgeblasenen Zustand) zumindest zwei geradlinige und zueinander in einem stumpfen Winkel verlaufende Abschnitte umfassen, wobei ein erster Abschnitt parallel zu einer Fahrzeuglängsachse verläuft und ein mit dem ersten Abschnitt verbundener zweiter Abschnitt sich ausgehend von dem ersten Abschnitt zu einem unteren Längsrand des Seitengassacks erstreckt, insbesondere wobei sich der zweite Abschnitt zumindest in einem an den unteren Längsrand des Gassacks angrenzenden Bereich zum Längsrand hin aufweitet. Die beiden Abschnitte können ineinander übergehen. Alternativ oder ergänzend kann der nicht-aufblasbare Bereich einen gekrümmten, C-förmigen Abschnitt umfassen. Der untere Längsrand bezieht sich auf einen montierten und aufgeblasenen Zustand des Seitengassacks im Kraftfahrzeug.

Indem sich zumindest ein Teil des nicht-aufblasbaren Teilbereichs in Fahrzeuglängsrichtung erstreckt, wird erreicht, dass sich der adaptiv anpassbare Entfaltungsabschnitt in montiertem und aufgeblasenen Zustand des Seitengassacks entlang einer Fahrzeughochrichtung bewegen kann, und zwar nach unten. Der adaptiv anpassbare Entfaltungsabschnitt kann also seine Höhe aufgrund des nicht-aufblasbaren Teilbereichs entsprechend anpassen. Somit kann durch den adaptiv anpassbaren Entfaltungsabschnitt auch dann eine Rückhaltekraft auf einen Fahrzeuginsassen, insbesondere auf einen Kopf eines Fahrzeuginsassen, ausgeübt werden, wenn sich der Fahrzeuginsasse in einer zurückgelehnten Position oder einer Liegeposition befindet.

Der nicht-aufblasbare Bereich umfasst vorzugsweise einen weiteren gekrümmten Abschnitt, der zumindest in einer Ebene (im aufgeblasenen Zustand) vollständig von dem aufblasbaren Bereich umgeben ist. Dieser ermöglicht unter anderem eine Beweglichkeit des adaptiv anpassbaren Entfaltungsabschnitts entlang einer Fahrzeuglängsrichtung, wodurch sich der adaptiv anpassbare Entfaltungsabschnitt noch besser in Bezug auf eine Position eines Fahrzeuginsassen ausrichten kann, also des zugeordneten Fahrzeugsitzes, beispielsweise wenn ein Fahrzeuginsasse eine Sitzposition in einem relativ großen Abstand zum Lenkrad einnimmt. Damit ist eine Position gemeint, in der ein Abstand eines Fahrzeuginsassen zum Lenkrad größer ist als es bei einer nichtautonomen bzw. herkömmlichen Fahrweise der Fall wäre.

Insbesondere begrenzen die Abschnitte des nicht-aufblasbaren Bereichs den adaptiv anpassbaren Entfaltungsabschnitt. Vorzugsweise ist zumindest auf einer Seitenfläche des Seitengassacks ein Aufnäher angeordnet, der den nicht-aufblasbaren Bereich zumindest teilweise, insbesondere nahezu vollständig oder vollständig, abdeckt. Der Aufnäher ist dabei auf einer zum Fahrzeuginsassen hin gerichteten Seitenfläche des Seitengassacks angeordnet. Auf diese Weise sind eine Rückhaltewirkung und eine Überschlagsperformance des Seitengassacks verbessert. Gemäß einer weiteren Ausführungsform kann beidseitig auf dem Seitengassack ein Aufnäher angeordnet sein, wodurch die Performance des Seitengassacks zusätzlich verbessert ist.

Gemäß einer bevorzugten Ausführungsform ist der Seitengassack ein Vorhang-Seitengassack, der eingerichtet ist, im Bereich eines Dachrahmens des Kraftfahrzeugs installiert zu sein. Durch einen Vorhang-Seitengassack ist ein Fahrzeuginsasse auch bei einem Seitenaufprall gut geschützt. Insbesondere wird so verhindert, dass ein Fahrzeuginsasse an einer Seitenstruktur oder einem Fenster des Kraftfahrzeugs anstößt.

Der Seitengassack kann, in einem Querschnitt gesehen, wenigstens drei im Wesentlichen separat ausgebildete Aufblaskammern umfassen, die entlang der Fahrzeuglängsachse nebeneinander angeordnet sind, wobei die mittlere Aufblaskammer dem adaptiv anpassbaren Entfaltungsabschnitt zugeordnet ist.

Dadurch kann ein besonders großer Seitenbereich des Kraftfahrzeugs durch den Seitengassack abgedeckt werden, insbesondere die komplette Fahrzeugseite. Die mittlere Aufblaskammer ist dabei den unterschiedlichen Kopfpositionen des Fahrzeuginsassen zugeordnet, die der Fahrzeuginsasse bei der Fahrt im autonom fahrenden Kraftfahrzeug einnehmen kann.

Die Aufgabe wird des Weiteren erfindungsgemäß gelöst durch ein Fahrzeugsicherheitssystem umfassend einen verstellbaren Fahrzeugsitz und einen zugeordneten Seitengassack der wie vorhergehend beschrieben ausgebildet ist, wobei der Seitengassack derart ausgebildet und im Fahrzeug angeordnet ist, dass er in einen aufgeblasenen Zustand entfaltbar ist, ohne sich an einer, sich in nach hinten geneigter Position befindenden Rückenlehne eines zugeordneten Fahrzeugsitzes abzustützen.

Hierbei ist insbesondere auch der adaptiv anpassbare Entfaltungsabschnitt des Seitengassackes behinderungsfrei aufblasbar.

Der Seitengassack ist vorzugsweise derart ausgebildet und relativ zu dem Fahrzeugsitz angeordnet ist, dass er sich im aufgeblasenen Zustand an einer, sich in Standardposition befindenden Rückenlehne des Fahrzeugsitzes abstützen kann, wobei der Hauptbereich (22) des Seitengassackes (10) trotz des Abstützens behinderungsfrei aufblasbar ist.

Hierbei erfolgt die Abstützung insbesondere mit einem unteren Ende des Seitengassacks, das sich im Wesentlichen parallel zur Fahrzeuglängsachse erstreckt.

Je nach Position des Fahrzeugsitzes kann ein Abstützpunkt des Seitengassacks im aufgeblasenen Zustand des Seitengassacks unterschiedlich sein, da der Abstützpunkt vom Fahrzeugsitz und somit dessen Position abhängt. Aufgrund der unterschiedlichen Lage des Abstützpunkts kann die Form des Seitengassacks in aufgeblasenem Zustand, insbesondere die Lage des adaptiv anpassbaren Entfaltungsabschnitts, an die Position des Fahrzeugsitzes angepasst sein und somit optimal auf eine Sitzposition eines Fahrzeuginsassen abgestimmt sein.

Der adaptiv anpassbare Entfaltungsabschnitt entfaltet sich in Richtung des Abstützpunkts, bis der adaptiv anpassbare Entfaltungsabschnitt auf diesen auftrifft.

Mit anderen Worten begrenzt der Abstützpunkt die Entfaltung des adaptiv anpassbaren Entfaltungsabschnitts.

Die Aufgabe wird des Weiteren erfindungsgemäß gelöst durch ein Fahrzeugsicherheitssystem umfassend einen verstellbaren Fahrzeugsitz und einen zugeordneten Seitengassack der wie vorhergehend beschrieben ausgebildet ist, wobei der Seitengassack derart ausgebildet und relativ zu dem Fahrzeugsitz angeordnet ist, das ein Abstützpunkt des Seitengassacks in dessen aufgeblasenen Zustand die Rückenlehne des Fahrzeugsitzes kontaktiert.

Hierdurch wird vorzugsweise ein im Bereich eines unteren Längsrandes des Seitengassacks ausgebildeter Strömungskanal zumindest teilweise verschlossen.

Bei einer bevorzugten Ausführungsform des Fahrzeugsicherheitssystems sind Aufnäher im aufgeblasenen Zustand des Seitengassacks oberhalb einer Rückenlehne eines zugeordneten Fahrzeugsitzes angeordnet, und die Aufnäher erstrecken sich, vorzugsweise, in Fahrzeuglängsrichtung beidseitig über den nicht-aufblasbaren Bereich des Seitengassacks hinaus.

Gemäß einer Ausführungsform ist eine relative Lage des Teilbereichs zum Hauptbereich des Seitengassacks im aufgeblasenen Zustand an eine Sitzposition eines Fahrzeuginsassen angepasst. Da der Teilbereich hauptsächlich zur Abstützung des Kopfes eines Fahrzeuginsassen dient, ist der Kopf des Fahrzeuginsassen in allen möglichen Sitzpositionen optimal abgestützt.

Weitere Vorteile und Merkmale der Erfindung ergeben sich aus der nachfolgenden Beschreibung und aus den Zeichnungen, auf die Bezug genommen wird. In den Zeichnungen zeigen:
- Figur 1 schematisch ein erfindungsgemäßes Fahrzeugsicherheitssystem mit einem erfindungsgemäßen Seitengassack im entfalteten Zustand,
- Figur 2 einen Querschnitt durch den erfindungsgemäßen Seitengassack im entfalteten Zustand,
- Figur 3 schematisch das erfindungsgemäße Fahrzeugsicherheitssystem in einem entfalteten Zustand des Seitengassacks, wobei sich der Fahrzeugsitz in einer ersten Position befindet und
- Figur 4 schematisch das erfindungsgemäße Fahrzeugsicherheitssystem in einem entfalteten Zustand des Seitengassacks, wobei sich der Fahrzeugsitz in einer zweiten Position befindet.

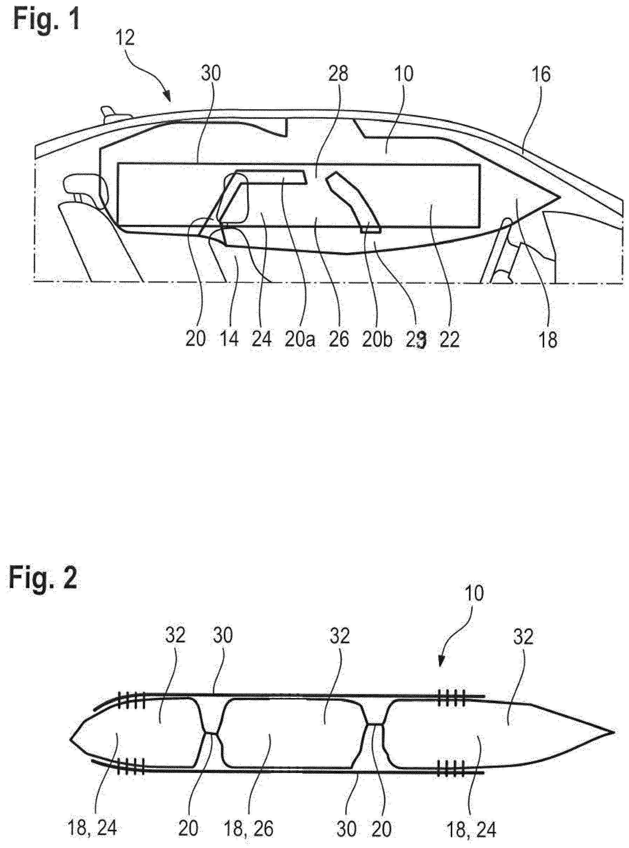

Figur 1 zeigt schematisch einen erfindungsgemäßen Seitengassack 10, der Bestandteil eines erfindungsgemäßen Fahrzeugsicherheitssystems 12 ist, welches den Seitengassack 10 und einen verstellbaren Fahrzeugsitz 14 umfasst.

Der Seitengassack 10 ist insbesondere für die Verwendung in autonom fahrenden Kraftfahrzeugen ausgelegt. In den gezeigten Ausführungsbeispielen ist der Seitengassack 10 als ein Vorhang-Seitengassack ausgebildet.

In Figur 1 ist der Seitengassack 10 in einem montierten Zustand in einem Kraftfahrzeug 16 gezeigt, wobei der Seitengassack 10 zur besseren Veranschaulichung in einem entfalteten Zustand dargestellt ist. Im normalen Fahrbetrieb ist der Seitengassack 10 in einem zusammengefalteten Zustand im Bereich eines Dachrahmens des Kraftfahrzeugs 16 angeordnet. Bei Bedarf wird der Seitengassack 10 aufgeblasen, beispielsweise mittels eines Gasgenerators.

Der Seitengassack 10 umfasst einen aufblasbaren Bereich 18 und einen nicht-aufblasbaren Bereich 20, wobei der nicht-aufblasbare Bereich 20 den aufblasbaren Bereich 18 in einen Hauptbereich 22 und einen Teilbereich 24 unterteilt.

Der nicht-aufblasbare Bereich 20 ist beispielsweise durch mindestens einen Ausschnitt oder durch mindestens einen Abnäher im Seitengassack 10 gebildet.

Aufgrund des nicht-aufblasbaren Bereichs 20 ist im aufgeblasenen Zustand des Seitengassacks 10 eine gewisse Beweglichkeit des Teilbereichs 24 relativ zum Hauptbereich 22 möglich, insbesondere in Fahrzeuglängsrichtung und in Fahrzeughochrichtung.

In dem gezeigten Ausführungsbeispiel ist der nicht-aufblasbare Bereich 20 zweigeteilt in einen ersten nicht-aufblasbaren Bereich 20a und einen zweiten nicht-aufblasbaren Bereich 20b.

Der erste nicht-aufblasbare Bereich 20a umfasst zwei geradlinige und zueinander in einem stumpfen Winkel verlaufende Abschnitte, wobei ein erster Abschnitt im Wesentlichen parallel zu einer Fahrzeuglängsachse des Kraftfahrzeugs 16 verläuft und ein mit dem ersten Abschnitt verbundener zweiter Abschnitt sich ausgehend von dem ersten Abschnitt zu einem unteren Längsrand des Seitengassacks 10 erstreckt. Der zweite Abschnitt weitet sich zumindest in einem an den unteren Längsrand des Seitengassacks 10 angrenzenden Bereich zum Längsrand hinauf.

Der zweite nicht-aufblasbare Bereich 20b umfasst dagegen in der gezeigten Ausführungsform einen gekrümmten Abschnitt, der zumindest in einer Ebene, insbesondere in einer Seitenebene des Kraftfahrzeugs, vollständig von dem aufblasbaren Bereich 18 umgeben ist, wie auch anschaulich aus Figur 1 hervorgeht.

Die beiden nicht-aufblasbaren Bereiche 20a, 20b grenzen den Teilbereich 24 des aufblasbaren Bereichs 18 zumindest teilweise vom Hauptbereich 22 ab, wie aus Figur 1 deutlich wird, wodurch der Teilbereich 24 annähernd autonom vom Hauptbereich 22 ist, sich also weitgehend unabhängig vom Hauptbereich 22 entfalten kann.

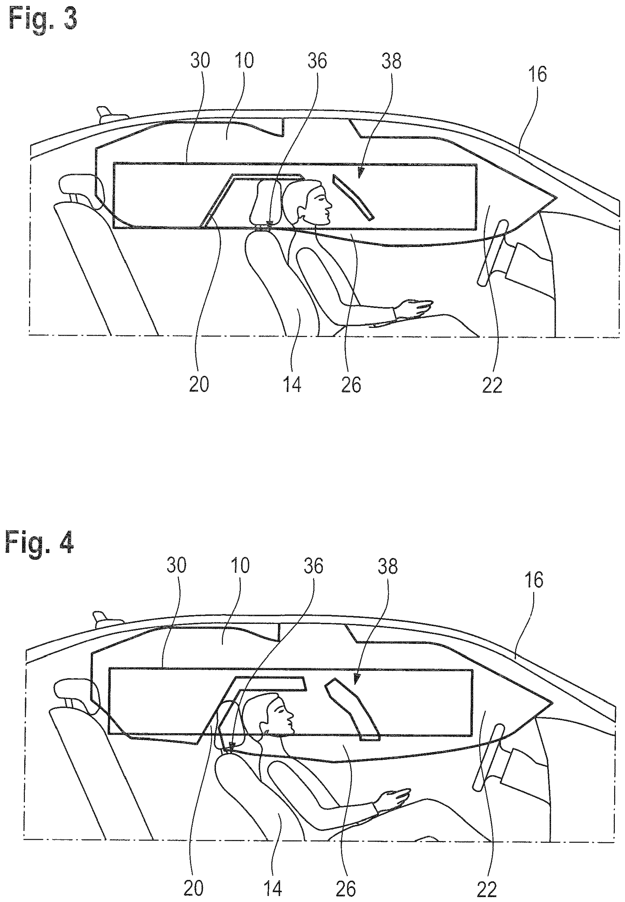

Der Teilbereich 24 stellt somit einen adaptiv anpassbaren Entfaltungsabschnitt 26 dar, der sich hinsichtlich seiner Entfaltungsform selbsttätig und adaptiv an die Position des zugeordneten Fahrzeugsitzes 14 anpassen kann, insbesondere weitgehend unabhängig vom Hauptbereich 22. Auf diese Weise kann die Lage bzw. Position des adaptiv anpassbaren Entfaltungsabschnitts 26 besonders gut auf eine Kopfposition eines Fahrzeuginsassen ausgerichtet sein, wie nachfolgend in Zusammenhang mit den Figuren 3 und 4 noch genauer erläutert wird.

Der adaptiv anpassbare Entfaltungsabschnitt 26 beziehungsweise der Teilbereich 24 ist von dem Hauptbereich 22 zumindest teilweise strömungsmäßig abgeschnitten, insbesondere durch den nicht-aufblasbaren Bereich 20, wie zuvor erläutert wurde.

Allerdings steht der adaptiv anpassbare Entfaltungsabschnitt 26 in der gezeigten Ausführungsform über zwei Strömungskanäle 28, 29 mit dem Hauptbereich 22 in Strömungsverbindung, sodass beim Aufblasen des Hauptbereichs 22 auch der adaptiv anpassbare Entfaltungsabschnitt 26 aufgeblasen wird. Die Strömungskanäle 28, 29 sorgen außerdem für eine gewisse Lagestabilität des adaptiv anpassbaren Entfaltungsabschnitts 26 und verhindern, dass sich der adaptiv anpassbare Entfaltungsabschnitt 26 beim Aufblasen des Seitengassacks 10 verdreht.

In der gezeigten Ausführungsform verläuft der erste Strömungskanal 28 zwischen den beiden nicht-aufblasbaren Bereiche 20a, 20b und der zweite Strömungskanal 29 zwischen dem zweiten nicht-aufblasbaren Bereich 20b und einem Längsrand des Seitengassacks 10.

Der nicht-aufblasbare Bereich 20 ist, vorzugsweise beidseitig, aber zumindest auf einer Seite (insbesondere auf der einem Fahrzeuginsassen zugewandten Seite, also der seitlichen Fahrzeuginnenwand abgewandten Seite) durch einen Aufnäher 30 im Wesentlichen vollständig abgedeckt, wobei sich der/die Aufnäher 30 in Fahrzeuglängsrichtung ein/beidseitig über den nicht-aufblasbaren Bereich 20 hinaus erstreckt/en. Insbesondere erstreckt/en sich der/die Aufnäher 30 nahezu über die gesamte Länge des Seitengassacks 10. Durch den/die Aufnäher 30 sind eine Rückhaltewirkung und eine Überschlagsperformance des Seitengassacks 10 verbessert.

Figur 2 zeigt einen Querschnitt durch den erfindungsgemäßen Seitengassack 10 im Bereich des adaptiv anpassbaren Entfaltungsabschnitts 26.

In dieser Schnittdarstellung sind die beidseitig angebrachten Aufnäher 30 deutlich gezeigt. Auch wird deutlich, dass der Seitengassack 10 drei im Wesentlichen separat ausgebildete Aufblaskammern 32 umfasst, die entlang der Fahrzeuglängsachse nebeneinander angeordnet sind, wobei die mittlere Aufblaskammer 32 dem adaptiv anpassbaren Entfaltungsabschnitt 26 zugeordnet ist bzw. den adaptiv anpassbaren Entfaltungsabschnitt 26 bildet. Das heißt, die mittlere Aufblaskammer 32 ist in Fahrzeuglängsrichtung begrenzt verschiebbar.

Die Funktionsweise des erfindungsgemäßen Seitengassacks 10 und des erfindungsgemäßen Fahrzeugsicherheitssystems 12 wird im Folgenden anhand der Figuren 3 und 4 näher erläutert.

Figur 3 zeigt das erfindungsgemäße Fahrzeugsicherheitssystem 12 in einem Zustand, in dem der Seitengassack 10 aufgeblasen ist, wobei sich der Fahrzeugsitz 14 in einer ersten Position befindet, und zwar in einer Position, in welcher der Fahrer das Kraftfahrzeug selbst fahren kann. In Figur 4 befindet sich der Fahrzeugsitz 14 dagegen in einer zweiten Position, in welcher der Fahrer weiter von dem Lenkrad beabstandet sitzt und nur eine autonome Fahrweise möglich ist, beispielsweise eine Liegeposition.

Wie in den Figuren 3 und 4 zu sehen ist, stützt sich der Seitengassack 10, insbesondere ein Ende des Seitengassacks 10, das sich parallel zur Fahrzeuglängsachse erstreckt, an dem Fahrzeugsitz 14 ab.

Genauer gesagt stützt sich der adaptiv anpassbare Entfaltungsabschnitt 26 an dem Fahrzeugsitz 14 ab, insbesondere ein dem Fahrzeugsitz 14 zugeordnetes Ende des Entfaltungsabschnitts 26.

Dabei ist, je nach Position des Fahrzeugsitzes 14 ein Abstützpunkt 36 des Seitengassacks 10, insbesondere des adaptiv anpassbaren Entfaltungsabschnitts 26, unterschiedlich.

Mit dem Begriff "Abstützpunkt" ist nicht zwingend ein einzelner Punkt gemeint, unter einem Abstützpunkt 36 kann auch eine Auflage- beziehungsweise Abstützfläche des Seitengassacks 10 auf dem Fahrzeugsitz 14 verstanden werden.

Dadurch, dass der Abstützpunkt 36 je nach Position des Fahrzeugsitzes 14 unterschiedlich ist, kann sich die Lage des adaptiv anpassbaren Entfaltungsabschnitts 26 entsprechend verändern, sodass ein Fahrzeuginsasse in jeder Sitzposition im Bedarfsfall optimal abgestützt wird.

Dies liegt insbesondere daran, dass sich der adaptiv anpassbare Entfaltungsabschnitt 26 im Auslösefall so lange in Richtung Fahrzeugsitz 14 entfaltet, bis er auf den Abstützpunkt 36 trifft.

Betrachtet man die Figuren 3 und 4, so ist zu sehen, dass in Figur 3 der Abstützpunkt 36, der zur besseren Veranschaulichung durch ein Kreuz gekennzeichnet ist, in Fahrzeughochrichtung weiter oben und in Fahrzeuglängsrichtung weiter vorne angeordnet ist, als bei der in Figur 4 dargestellten Sitzposition, die einer Liegeposition entspricht. Demnach liegt auch die Position des Kopfes des Fahrzeuginsassen in Figur 3 weiter oben und weiter vorne als bei der in Figur 4 dargestellten Sitzposition.

Bei dem in Figur 3 gezeigten Szenario ist der adaptiv anpassbare Entfaltungsabschnitt 26 nach dem Aufblasen des Seitengassacks 10 in einer ersten Position angeordnet. Der nicht-aufblasbare Bereich 20 wird in diesem Zustand von dem aufblasbaren Bereich 18, also dem Hauptbereich 22 und dem adaptiv anpassbaren Entfaltungsabschnitt 26, zusammengedrückt, wie im Vergleich der beiden Figuren 3 und 4 deutlich zu erkennen ist. Dadurch kann der adaptiv anpassbare Entfaltungsabschnitt 26 entsprechend der Position des Fahrzeugsitzes 14 in Figur 3 eine relativ weit oben liegende Position einnehmen.

In Figur 4 wird der nicht-aufblasbare Bereich 20 weniger stark (oder sogar gar nicht) zusammengedrückt, da der Abstützpunkt 36 und folglich auch der adaptiv anpassbare Entfaltungsabschnitt 26 in Fahrzeughochrichtung weiter unten und in Fahrzeuglängsrichtung weiter hinten zu liegen kommt als bei der in Figur 3 dargestellten Position des Fahrzeugsitzes 14. Mit anderen Worten kann sich der Seitengassack 10, insbesondere der adaptiv anpassbare Entfaltungsabschnitt 26, in Fahrzeughochrichtung weiter nach unten in Richtung des Fahrzeugsitzes 14 entfalten. Dies liegt unter anderem daran, dass der Abstützpunkt 36 entsprechend tiefer liegt im Vergleich zu der in Figur 3 gezeigten Situation.

Somit ist eine Lage des Teilbereichs 24, insbesondere des adaptiv anpassbaren Entfaltungsabschnitts 26, relativ zum Hauptbereich 22 im aufgeblasenen Zustand des Seitengassacks 10 an eine Sitzposition des Fahrzeuginsassen angepasst, die durch die Position des Fahrzeugsitzes 14 definiert ist.

Wie aus den Figuren 3 und 4 deutlich wird, entfaltet sich der Hauptbereich 22 des Seitengassacks 10 unabhängig von der Sitzposition bzw. der Position des Fahrzeugsitzes 14 im Wesentlichen gleichartig. Die adaptive Anpassung des Seitengassacks 10, insbesondere des adaptiv anpassbaren Entfaltungsabschnitts 26, erfolgt demnach über den nicht-aufblasbaren Bereich 20.

In den Figuren 3 und 4 ist zudem ein Bereich 38 durch eine Umrisslinie kenntlich gemacht, in dem der Kopf eines Fahrzeuginsassen unter Berücksichtigung aller möglichen Positionen des Fahrzeugsitzes 14 zu liegen kommen kann. Durch den erfindungsgemäßen Seitengassack 10 mit dem adaptiv anpassbaren Entfaltungsabschnitt 26 kann dieser Bereich im Bedarfsfall zuverlässig abgedeckt werden.

## Patentansprüche

1. Kraftfahrzeug (16), insbesondere Kraftfahrzeug (16), das ausgebildet ist, zumindest teilweise oder zeitweise autonom zu fahren, mit einem Fahrzeugsicherheitssystem, das einen verstellbaren Fahrzeugsitz und einen zugeordneten Seitengassack (10) umfasst, wobei der Seitengassack (10) mindestens einen aufblasbaren Bereich (18) und mindestens einen nicht-aufblasbaren Bereich (20) umfasst, der den aufblasbaren Bereich (18) unterteilt und zumindest einen adaptiv anpassbaren Entfaltungsabschnitt (26) ausbildet, der ausgebildet ist, sich hinsichtlich seiner Entfaltungsform selbsttätig und adaptiv an die Position eines zugeordneten Fahrzeugsitzes (14) anzupassen, **dadurch gekennzeichnet, dass** der Seitengassack (10) derart ausgebildet und im Fahrzeug angeordnet ist, dass der Seitengassack (10) sich im aufgeblasenen Zustand an einer, sich in Standardposition befindenden Rückenlehne (14) des Fahrzeugsitzes abstützen kann, wobei ein Abstützpunkt (36) des Seitengassacks (10) derart angeordnet ist, dass in dessen aufgeblasenen Zustand ein im Bereich eines unteren Längsrandes des Seitengassacks (10) ausgebildeter Strömungskanal (29), zumindest teilweise verschließbar ist, indem der Abstützungspunkt (36) die Rückenlehne (14) des Fahrzeugsitzes kontaktiert, oder, dass der Seitengassack (10) in einen aufgeblasenen Zustand entfaltbar ist, ohne sich an einer, sich in nach hinten geneigter Position befindenden Rückenlehne (14) des Fahrzeugsitzes abzustützen, wobei auch der adaptiv anpassbare Entfaltungsabschnitt (26) des Seitengassackes (10) behinderungsfrei aufblasbar ist.

2. Kraftfahrzeug (16) nach Anspruch 1, **dadurch gekennzeichnet, dass** der adaptiv anpassbare Entfaltungsabschnitt (26) des Seitengassacks (10) ein Teilbereich (24) des aufblasbaren Bereichs (18) ist, der von einem Hauptbereich (22) des aufblasbaren Bereichs (18) zumindest teilweise strömungstechnisch abgetrennt ist.

3. Kraftfahrzeug (16) nach Anspruch 2, **dadurch gekennzeichnet, dass** der adaptiv anpassbare Entfaltungsabschnitt (26) der Seitengassacks (10) über mindestens einen Strömungskanal (28, 29) mit dem Hauptbereich (22) in Strömungsverbindung steht, wobei, vorzugsweise, der adaptiv anpassbare Entfaltungsabschnitt (26) über zumindest zwei Strömungskanäle (28, 29) mit dem Hauptbereich (22) in Strömungsverbindung steht, und/ oder wobei, vorzugsweise, mindestens der Strömungskanal (29) an einen unteren Längsrand des Seitengassacks (10) angrenzt.

4. Kraftfahrzeug (16) nach einem der vorhergehenden Ansprüche, **dadurch gekennzeichnet, dass** der nicht-aufblasbare Bereich (20) des Seitengassacks (10) durch mindestens einen Ausschnitt im Seitengassack (10) und/ oder durch mindestens einen Abnäher im Seitengassack (10) gebildet ist.

5. Kraftfahrzeug (16) nach einem der vorhergehenden Ansprüche, **dadurch gekennzeichnet, dass** der nicht-aufblasbare Bereich (20) des Seitengassacks beidseitig durch einen Aufnäher (30) im Wesentlichen vollständig abgedeckt ist, wobei, vorzugsweise, sich die Aufnäher (30) in Fahrzeuglängsrichtung beidseitig über den nicht-aufblasbaren Bereich (20) hinaus erstrecken, und wobei, weiter vorzugsweise, sich die Aufnäher (30) nahezu über die gesamte Länge des Seitengassacks (10) erstrecken.

6. Kraftfahrzeug (16) nach einem der vorhergehenden Ansprüche, **dadurch gekennzeichnet, dass** der nicht-aufblasbare Bereich (20) des Seitengassacks zumindest zwei geradlinige und zueinander in einem stumpfen Winkel verlaufende Abschnitte (20a, 20b) umfasst, wobei ein erster Abschnitt (20a) im Wesentlichen parallel zu einer Fahrzeuglängsachse verläuft und ein mit dem ersten Abschnitt (20a) verbundener zweiter Abschnitt (20b) sich ausgehend von dem ersten Abschnitt (20a) zu einem unteren Längsrand des Seitengassacks (10) erstreckt, insbesondere wobei sich der zweite Abschnitt (20b) zumindest in einem an den unteren Längsrand des Seitengassacks (10) angrenzenden Bereich zum Längsrand hin aufweitet.

7. Kraftfahrzeug (16) nach einem der vorhergehenden Ansprüche, **dadurch gekennzeichnet, dass** der nicht-aufblasbare Bereich (20) des Seitengassacks (10) einen gekrümmten Abschnitt umfasst, der zumindest in einer Ebene vollständig von dem aufblasbaren Bereich (18) umgeben ist, und/ oder **dadurch gekennzeichnet, dass** zumindest auf einer Seitenfläche des Seitengassacks (10) ein Aufnäher (30) angeordnet ist, der den nicht-aufblasbaren Bereich (20) zumindest teilweise abdeckt.

8. Kraftfahrzeug (16) nach einem der vorhergehenden Ansprüche, **dadurch gekennzeichnet, dass** der Seitengassack (10) ein Vorhang-Seitengassack ist, der eingerichtet ist, im Bereich eines Dachrahmens des Kraftfahrzeugs (16) installiert zu sein.

9. Kraftfahrzeug (16) nach einem der vorhergehenden Ansprüche, **dadurch gekennzeichnet, dass** der Seitengassack (10), in einem Querschnitt gesehen, wenigstens drei im Wesentlichen separat ausgebildete Aufblaskammern (32) umfasst, die entlang der Fahrzeuglängsachse nebeneinander angeordnet sind, wobei die mittlere Aufblaskammer (32) dem adaptiv anpassbaren Entfaltungsabschnitt (26) zugeordnet ist.

10. Kraftfahrzeug (16) nach einem der vorhergehenden Ansprüche, **dadurch gekennzeichnet, dass** der Seitengassack (10) im aufgeblasenen Zustand an der, sich in Standardposition befindenden Rückenlehne (14) des Fahrzeugsitzes mit einem unteren Ende des Seitengassacks (10), das sich im Wesentlichen parallel zur Fahrzeuglängsachse erstreckt, abstützen kann, wobei jedoch der Hauptbereich (22) des Seitengassackes (10) trotz des Abstützens behinderungsfrei aufblasbar ist.

11. Kraftfahrzeug (16) nach einem der vorhergehenden Ansprüche, **dadurch gekennzeichnet, dass** die Aufnäher (30) im aufgeblasenen Zustand des Seitengassacks (10) oberhalb einer Rückenlehne (14) eines zugeordneten Fahrzeugsitzes angeordnet sind, und sich die Aufnäher (30) in Fahrzeuglängsrichtung beidseitig über den nicht-aufblasbaren Bereich (20) des Seitengassacks (10) hinaus erstrecken.

## Claims

1. An automotive vehicle (16), especially an automotive vehicle (16) which is configured for driving autonomously at least partially or temporarily, comprising a vehicle safety system comprising an adjustable vehicle seat and an assigned side airbag (10), wherein the side airbag (10) comprises at least one inflatable area (18) and at least one non-inflatable area (20) which subdivides the inflatable area (18) and forms at least one adaptive deployment portion (26) which is configured for adapting, regarding its deployment shape, automatically and adaptively to the position of an assigned vehicle seat (14), **characterized in that** the side airbag (10) is configured and disposed within the vehicle so that in the inflated state the side airbag (10) may bear on a backrest (14) of the vehicle seat being provided in a standard position, wherein a bearing point (36) of the side airbag (10) is disposed so that in the inflated state of the latter a flow passage (29) formed in the area of a lower longitudinal edge of the side airbag (10) is at least partly closable by the bearing point (36) contacting the backrest (14) of the vehicle seat or **in that** the side airbag (10) can be deployed into an inflated state without bearing against a backrest (14) of the vehicle seat being provided in a position reclined to the rear, wherein also the adaptive deployment portion (26) of the side airbag (10) is inflatable free from obstruction.

2. The automotive vehicle (16) according to claim 1, **characterized in that** the adaptive deployment portion (26) of the side airbag (10) is a subarea (24) of the inflatable area (18) which is fluidically separated at least partly from a main area (22) of the inflatable area (18).

3. The automotive vehicle (16) according to claim 2, **characterized in that** the adaptive deployment portion (26) of the side airbag (10) is in fluid communication with the main area (22) via at least one flow passage (28, 29), wherein preferably the adaptive deployment portion (26) is in fluid communication with the main area (22) via at least two flow passages (28, 29), and/or wherein preferably at least the flow passage (29) is adjacent to a lower longitudinal edge of the side airbag (10).

4. The automotive vehicle (16) according to any one of the preceding claims, **characterized in that** the non-inflatable area (20) of the side airbag (10) is formed by at least one cutout in the side airbag (10) and/or by at least one dart in the side airbag (10).

5. The automotive vehicle (16) according to any one of the preceding claims, **characterized in that** the non-inflatable area (20) of the side airbag is covered substantially completely on both sides by a patch (30), wherein preferably the patches (30) extend in the longitudinal vehicle direction on both sides beyond the non-inflatable area (20) and wherein, further preferred, the patches (30) extend almost along the entire length of the side airbag (10).

6. The automotive vehicle (16) according to any one of the preceding claims, **characterized in that** the non-inflatable area (20) of the side airbag comprises at least two linear portions (20a, 20b) extending at an obtuse angle relative to each other, wherein a first portion (20a) extends substantially in parallel to a longitudinal vehicle axis and a second portion (20b) connected to the first portion (20a) extends from the first portion (20a) to a lower longitudinal edge of the side airbag (10), especially wherein the second portion (20b) widens at least in an area adjacent to the lower longitudinal edge of the side airbag (10) towards the longitudinal edge.

7. The automotive vehicle (16) according to any one of the preceding claims, **characterized in that** the non-inflatable area (20) of the side airbag (10) comprises a curved portion which is completely surrounded by the inflatable area (18) at least in one plane, and/or **characterized in that** at least on a side face of the side airbag (10) a patch (30) at least partially covering the non-inflatable area (20) is arranged.

8. The automotive vehicle (16) according to any one of the preceding claims, **characterized in that** the side airbag (10) is a curtain side airbag which is arranged to be installed in the area of a roof rail of the automotive vehicle (16).

9. The automotive vehicle (16) according to any one of the preceding claims, **characterized in that**, when viewed in cross-section, the side airbag (10) comprises at least three substantially separately configured inflation chambers (32) which are juxtaposed along the longitudinal vehicle axis, the central inflation chamber (32) being assigned to the adaptive deployment portion (26).

10. The automotive vehicle (16) according to any one of the preceding claims, **characterized in that** the side airbag (10) in the inflated state may bear on the backrest (14) of the vehicle seat being provided in a standard position by a lower end of the side airbag (10) which extends substantially in parallel to the longitudinal vehicle axis, wherein, despite of said bearing, the main area (22) of the side airbag (10) is inflatable free from obstruction, however.

11. The automotive vehicle (16) according to any one of the preceding claims, **characterized in that** in the inflated state of the side airbag (10) the patches (30) are arranged above a backrest (14) of an assigned vehicle seat and the patches (30) extend in the longitudinal vehicle direction on both sides beyond the non-inflatable area (20) of the side airbag (10).

## Revendications

1. Véhicule automobile (16), en particulier véhicule automobile (16), qui est conçu pour rouler de manière autonome au moins partiellement ou par moments, avec un système de sécurité du véhicule qui comprend un siège de véhicule réglable et un airbag latéral associé (10), pour lequel le coussin gonflable latéral (10) possède au moins une région gonflable (18) et au moins une région non gonflable (20), laquelle divise la région gonflable (18) et forme au moins une section de déploiement réglable de manière adaptative (26), qui est conçue pour s'ajuster automatiquement et de manière adaptative à la position d'un siège de véhicule (14) associé en ce qui concerne sa forme de déploiement, **caractérisé en ce que** le coussin gonflable latéral (10) est conçu et disposé dans le véhicule à moteur de telle manière que le coussin gonflable latéral (10) peut être soutenu dans l'état gonflé sur un dossier (14) qui se trouve en position standard du siège du véhicule , pour lequel un point d'appui (36) du coussin gonflable latéral (10) est agencé de telle sorte que, dans son état gonflé, un canal d'écoulement (29) formé dans la zone d'un bord longitudinal inférieur du coussin gonflable latéral (10) peut être fermé au moins partiellement, **en ce que** le point d'appui (36) du dossier (14) du siège du véhicule vient en contact, ou, que le coussin gonflable latéral (10) peut être déplié dans un état gonflé, sans être soutenu sur un dossier (14) du siège du véhicule qui se trouve dans une position inclinée vers l'arrière, pour lequel la section de déploiement adaptative réglable (26) du coussin gonflable latéral (10) peut être gonflée sans entrave.

2. Véhicule automobile (16) selon la revendication 1, **caractérisé en ce que** la section de déploiement adaptative réglable (26) du coussin gonflable latéral (10) est une zone partielle (24) de la zone gonflable (18) qui est séparée d'une zone principale (22) de la zone gonflable (18) est au moins partiellement séparée en fluidique.

3. Véhicule automobile (16) selon la revendication 2, **caractérisé en ce que** la section de déploiement adaptative réglable (26) du coussin gonflable latéral (10) est en communication fluidique avec la zone principale (22) via au moins un canal d'écoulement (28 , 29), pour lequel, de préférence, la section de déploiement adaptative réglable (26) est en communication d'écoulement avec la zone principale (22) via au moins deux canaux d'écoulement (28, 29), et/ou pour lequel, de préférence, au moins le canal d'écoulement (29) est adjacent à un bord longitudinal inférieur du coussin gonflable latéral (10).

4. Véhicule automobile (16) selon l'une des revendications précédentes, **caractérisé en ce que** la zone non gonflable (20) du coussin gonflable latéral (10) est formée par au moins une découpe dans le coussin gonflable latéral (10) et/ou par au moins une pince sur l'airbag latéral (10).

5. Véhicule automobile (16) selon l'une des revendications précédentes, **caractérisé en ce que** la zone non gonflable (20) du coussin gonflable latéral est essentiellement entièrement recouverte des deux côtés par un patch (30), pour lequel, de préférence, les patchs (30) s'étendent de des deux côtés dans la direction longitudinale du véhicule au-delà de la zone non gonflable (20), et pour lequel, plus préférablement, les patchs (30) s'étendent presque sur toute la longueur de l'airbag latéral (10).

6. Véhicule automobile (16) selon l'une des revendications précédentes, **caractérisé en ce que** la zone non gonflable (20) du coussin gonflable latéral comprend au moins deux tronçons rectilignes (20a, 20b) s'étendant selon un angle obtus l'un par rapport à l'autre, pour lequel une première section (20a) s'étend essentiellement parallèlement à un axe longitudinal du véhicule et une deuxième section (20b) reliée à la première section (20a) s'étend depuis la première section (20a) jusqu'à un bord longitudinal inférieur du coussin gonflable latéral ( 10), en particulier pour lequel la deuxième section (20b) s'élargit vers le bord longitudinal au moins dans une région contiguë au bord longitudinal inférieur du coussin gonflable latéral (10).

7. Véhicule automobile (16) selon l'une des revendications précédentes, **caractérisé en ce que** la zone non gonflable (20) du coussin gonflable latéral (10) comprend une section courbe qui est complètement entourée par la zone gonflable (18) au moins dans un plan, et/ou **caractérisé en ce qu'**un patch (30), qui recouvre au moins partiellement la zone non gonflable (20), est disposé sur au moins une face latérale du coussin gonflable latéral (10).

8. Véhicule automobile (16) selon l'une des revendications précédentes, **caractérisé en ce que** l'airbag latéral (10) est un airbag latéral rideau qui est agencé pour être installé au niveau d'une structure de toit du véhicule automobile (16).

9. Véhicule automobile (16) selon l'une des revendications précédentes, **caractérisé en ce que** le coussin gonflable latéral (10), vu en coupe transversale, comprend au moins trois chambres de gonflage (32) formées essentiellement séparément qui sont disposées à côté d'une une autre le long de l'axe longitudinal du véhicule, pour lequel la chambre de gonflage médiane (32) est associée à la section de déploiement réglable de manière adaptative (26).

10. Véhicule automobile (16) selon l'une des revendications précédentes, **caractérisé en ce que** le coussin gonflable latéral (10) à l'état gonflé peut prendre appui sur le dossier (14) du siège du véhicule, qui est en position standard, avec une extrémité inférieure du coussin gonflable latéral (10), qui s'étend essentiellement parallèlement à l'axe longitudinal du véhicule, pour lequel cependant la zone principale (22) du coussin gonflable latéral (10) peut être gonflée sans entrave malgré l'appui.

11. Véhicule automobile (16) selon l'une des revendications précédentes, **caractérisé en ce que** les patchs (30) sont disposés à l'état gonflé du coussin gonflable latéral (10) au-dessus d'un dossier (14) d'un siège de véhicule associé, et que les patchs (30) dans la direction longitudinale du véhicule s'étendent des deux côtés au-delà de la zone non gonflable (20) de l'airbag latéral (10).
